Europäisches Patentamt

European Patent Office

Office européen des brevets

(19)

(11) Publication number: **0 011 328**
A2

# EUROPEAN PATENT APPLICATION

(12)

(21) Application number: **79200628.0**

(22) Date of filing: **29.10.79**

(51) Int. Cl.³: **F 16 K 35/02**
**F 16 K 15/02**

(30) Priority: .10.11.78 IT 2327178

(43) Date of publication of application:
**28.05.80 Bulletin 80/11**

(84) Designated Contracting States:
**AT BE CH DE FR GB LU NL SE**

(71) Applicant: **FRO-Fabbriche Riunite Ossigeno S.p.A.**
**Piazza Citadella, 6**
**I-37122 Verona(IT)**

(72) Inventor: **Fusato, Giorgio c/o FRO - Fabbriche Riunite**
**Ossigeno S.p.A. Piazza Cittadella, 6**
**I-37122 Verona(IT)**

(74) Representative: **Giambrocono, Alfonso, Dott. Ing.**
**Via Rosolino Pilo 19/B**
**I-20129 Milano(IT)**

(54) **A valve for a pressurized fluid containing cylinder.**

(57) A valve for a pressurized fluid containing cylinder having a plunger (6) axially moving along a seating provided in a first hollow block member (2) suitable for connection of the cylinder to a consumer, said plunger (6) being opened by the connecting operation against the counteraction of a spring means (9).

In order to prevent the unauthorized refilling of the cylinder without disassembling of the valve (1), a second block member (5) closely cooperates with the first block member (2) and is provided with a shutter (12) which, after the first filling operation of the cylinder, is moved in a position which allows the exiting of the pressurized fluid from the cylinder but hinders the refilling of the same cylinder unless the valve (1) is completely disassembred.

Fig. 1

0011328

– 1 –

A valve for a pressurized fluid containing cylinder

The invention relates to a valve for a pressurized fluid containing cylinder, said valve being of the type comprising a hollow block member connectable to the consumer and having an axial seating for accomodating a movable member fitted with a closure head within the cavity of said block member and a spring means cooperating with said closure head for maintaining the latter in its normally closed position, said movable member being opened by connection of said block member to the consumer, or by a control handwheel.

The conventional valves of this type are normally used also for refilling the cylinder by simply connecting the block member directly to the source: this involves the serious disavantage of affording such refilling operations to unau= thorized persons, with the obvious drawblacks resulting the= refrom.

The invention as claimed is intended to provide a remedy. It solves the problem of how to design a valve for a pressuri= zed fluid containing cylinder so constructed to make it im= possible to refill a cylinder, except after complete disas= sembling of the valve.

The advantages offered by the invention are mainly that after the first filling, means making part of the valve are so displaced so as to avoid any possibility of direct connection of the source to the cylinder.

One way for carrying out the invention is described in detail below with reference to the drawings which illustrate only one specific embodiment, in which:

Fig. 1 is a fragmentary longitudinal sectional view showing the valve as a whole; and

Fig. 2 is an enlarged view showing a detail of the sliding shutter.

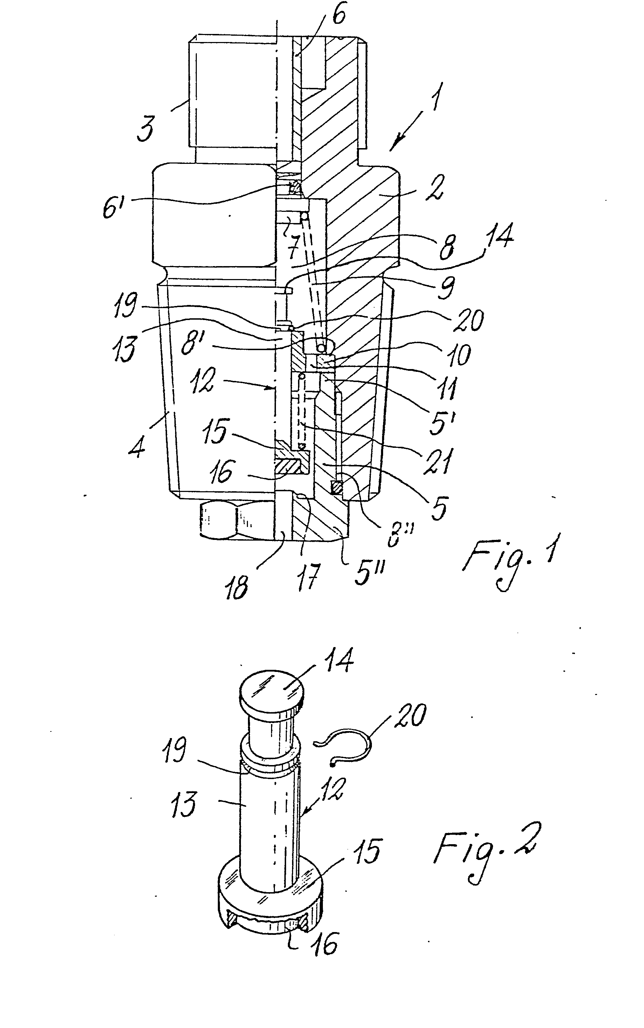

Referring to the figures of the drawing, a valve – generally denoted at 1 – essentially comprises a first block member 2 provided with external thread 3 for the connection of a conventional device (not shown) for control and connection to a consumer, and a further external thread 4 to secure said block 2 to a conventional cylinder (not shown) having any pressurized fluid stored therein, and a second block member 5 closely associated with said first block member 2.

Block 2 has an axial plunger 6 provided with a seal 6' and head 7, the latter within a bore 8 of the first block and cooperating with a spring 9 resisted by a diaphragm 10, provided with peripheral passages 11 and held in place against a shoulder 8' of said bore 8.

Clamping of diaphragm 10 is provided by pressure of end portion 5' of block 5 screwed down at 8" along the outer end of said bore 8. Said spring 9 is calibrated to a sufficient predetermined value to ensure the required sealing of head 7 when valve 1 is disconnected from the device for control and connection to a consumer.

Diaphragm 10 is centrally bored for free axial sliding of a shutter, generally designated at 12, comprising a stem 13 provided at the end facing said head 7 with a flange 14 and at the opposite side with a head 15 containing a suitable seal 16 for cooperation with a peripheral edge 17 of an in= let 18 axially provided on the second block member 5 and suitable for connection of valve 1 to the cylinder.

Stem 13 is provided with a circumferential groove 19 for re= movably accomodating a fork element 20 and between said head 15 and diaphragm 10 a spring 21 is located, which spring is calibrated to a rate less than the standard value for loa= ding pressure of the fluid within the cylinder, but suffi= cient to retain said shutter 12 at closed position when such a pressure value is falling down with unloded or nearly un= loaded cylinder.

For the first filling of the cylinder, valve 1 is connected through thread 3 to a conventional loading supply, and pres= surized fluid downward moves said plunger 6 and associated head 7 against the resisting action of the suitably calibra= ted spring 9 by a sufficient distance to flood said bore or cavity 8, then flows through passages 11 of diaphragm 10 and, being said shutter 12 held open by fork element 20 co= operating with the upper side of diaphragm 10, passes thro= ugh hole 18 and penetrates into the cylinder. Upon complec= tion of the filling operation, plunger 6 is manually opera= ted by depressing it to a sufficient extent to contact said head 7 with head 14 to cause a forced lowering of shutter 12 until fork element 20 is disconnected from groove 19. Said

0011328

shutter 12 is now free to axially move through diaphragm 10 and close by its head 15 said hole 18 when the pressure within the cylinder is zero or nearly zero.

In use and with a cylinder at normal load pressure, the pressurized fluid passes through hole 18, lifts shutter 12, flows through passages 11 in diaphragm 10 and penetrates into bore or cavity 8. From said bore or cavity, the fluid may flow to a consumer when plunger 6 and associated head 7 are lowered through the action of the device for the control and connection to a consumer, in such a case the interception occuring just upstream of the consumer.

Of course, no fluid would exit from valve 1 should the latter be disconnected from said device for control and connection, due to the fluid pressure acting on head 7 to close the latter, aided by the closure action exerted by spring 9 on said head 7.

With said fork element 20 removed from groove 19 and cylinder unloaded or however at a load pressure less than calibration of spring 21, said shutter 12 automatically closes and any attempt to refill the cylinder is impossible to be carried out, unless said valve 1 is completely disassembled.

In the embodiment shown, said valve 1 is of the type connectable to a device for control and connection to a consumer, the connection and disconnection of which causes the automatic lowering and releasing of plunger 6, but of course the inventive concept may be readily applied to valves of the type provided with control handwheel, in these cases the stem of such a handwheel directly operating on a member corresponding to the above described head 7.

- 5 -

0011328

In order to prevent unauthorized persons from effecting re=
filling operation by disassembling, block 5 may be provided
with a seal or a similar means for making evident any for=
bidden refilling.

Alternatively, said block 5 may be made of difficult removal
from block 2, shaping its portion 5" to prevent any gripping
by conventional tools, or by doweling it to block 2, or also
by interposing a self-hardening resin along the contact por=
tion of the two blocks, such as along the threated portion
8".

0011328

Claims:

1. A valve for a pressurized fluid containing cylinder comprising a first hollow block member (2) connectable to the consumer and having an axial seating for accomodating a movable member (6) fitted with a first closure head (7) within the cavity (8) of said first block member (2) and a first spring means (9) cooperating with said first head (7) for maintaining the latter in its normally closed position, said movable member (6) being opened by connection of said first block member (2) to said consumer, or by a control handwheel, characterised in

that it further comprises a second allow block member (5) closely cooperating with said first block member (2), a sliding shutter (12) interposed between said first (2) and second (5) block members, a second spring means 21 for retaining said shutter (12) in its normally closed position, and retaining means (20) not accessible from the outside of said valve (1) for temporariliy retaining said shutter (12) in its open position only during the first filling of said cylinder.

2. A valve as claimed in claim 1, in which a diaphragm (10) provided with passages (11) is interposed between said first (2) and second (5) block members, said shutter (12) comprising a stem (13) provided with a second head (15) and axially sliding through said diaphragm (10), and an element (20) associated with said stem (13) for initially and temporarily maintaining said second head (15) at opening position , said associated element (20) being removable for forcibly acting on said stem (13) in the closing direction of said second head (15).

3. A valve as claimed in claim 2, in which said element (20) associated with said stem (13) is conveniently a fork element removably cooperating with a circumferential groove (19) in said stem (13), or an equivalent breakable means, said fork element (20), or said breakable means, being positioned at a sufficient spacing from said second head (15) to maintain the latter at open position for the initial and temporary engagement of said element.(20) with said diaphragm (10).

4. A valve as claimed in claim 3, in which said stem (13) is aligned with said first head (7), so that an intended prolon= ged stroke of said movable member (6) carrying said first head (7) causes a forced axial displacement of the stem (13) and resulting disconnection of said fork element (20) from the associated groove (19) or the breakage of said equiva= lent breakable means.

5. A valve as claimed in claim 1, in which means are provided for inhibiting or at least making troublesome the disassem= bling of said block members (2,5) or making evident any un= authorized disassembling of the same block members.

0011328

Fig. 1

Fig. 2